# EUROPEAN PATENT SPECIFICATION

(11) **EP 1 143 631 B1**
(45) Date of publication and mention of the grant of the patent: **07.06.2006**
(21) Application number: 01108778.0
(22) Date of filing: 06.04.2001
(51) Int. Cl.: H04B 1/707

(54) **Multi-path detecting circuit, system and method**
Schaltung, System und Verfahren zur Mehrwegdetektion
Circuit, système et procédé de détection des voies multiples

(30) Priority: 07.04.2000 JP 2000106558
(43) Date of publication of application: 10.10.2001
(73) Proprietor: NEC CORPORATION, Tokyo (JP)
(72) Inventor: Ohsuge, Michihiro, Minato-ku, Tokyo (JP)
(74) Representative: Vossius & Partner

(56) References cited:
- EP-A- 0 945 995
- WO-A-99/57819
- US-A- 6 094 449

## Description

This application claims benefit of Japanese Patent Application No. 2000-106558 filed on April 7, 2000, the contents of which are incorporated by the reference.

The present invention relates to multi-path detecting circuits and, more particularly, to multi-path detecting circuits and method used for CDMA (spread spectrum) systems.

A multi-path detecting circuit or a path timing detecting circuit used for a CDMA receiver usually performs computation concerning correlation between received signal and spread code, thus making propagation channel delayed profile measurement for delayed profile correlation peak position detection. Such multi-path detecting circuits or related techniques are disclosed for instance, as "CDMA Multi-path Search Method and CDMA Signal Receiver" in JP-A-9-181704, as "Receiver of Direct Spread CDMA Transmitting System" in JP-A-10-190522, as "CDMA Mobile Communication Receiver" in JP-A-10-271034, as "Reception Timing Detecting Circuit for CDMA Receiver" in JP-A-10-32523, as "Long Code Searching Method in DS-CDMA Inter-Base Station Asynchronous Cellular System" in JP-A-11-205864 and as "Spread Spectrum Receiver" in JP-A-11-4213.

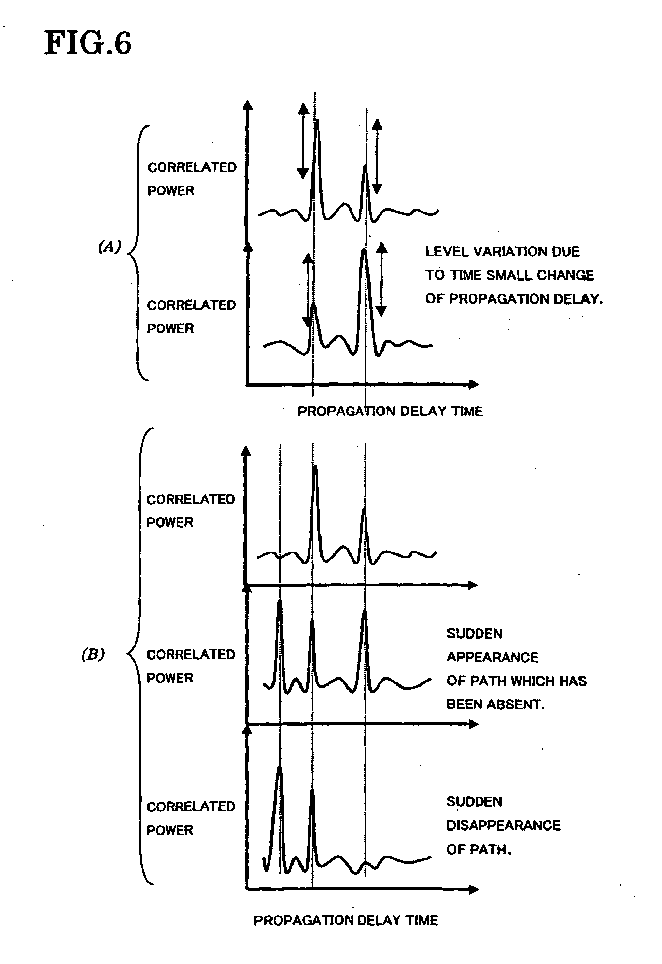

The shape of delayed profile at a mobile terminal varies with the movement of the terminal. Figs. 6(A) and 6(B) show examples of delayed profile variations. In the Figures, the ordinate (or vertical axis) is taken for the correlated power level, and the abscissa (or horizontal axis) is taken for the propagation delay time. In the example of Fig. 6(A), mainly only the path level is varied due to fading, and the path timing is not substantially changed. In this case, it is better for obtaining satisfactory characteristics to average the delayed profile for a relatively long period of time so as to obtain sufficient level variation averaging. With an insufficient averaging time, usually pathes of high average received power levels are not accurately determined particularly in cases where the number of detected pathes is greater than the number of the receiver fingers.

On the other hand, a case may arise that a wave having been blocked by a building, for instance, suddenly appears. Fig. 6(B) illustrates such a case. As shown, a path which has been absent in the status in the upper part of the Figure, suddenly appears as shown in the middle part of the Figure, or a path having been present in the status in the middle part of the Figure, suddenly disappears as in the lower part of the Figure. In this case, the long period delayed profile averaging as in the above case results in too long time until recognition of a new path, thus disabling the follow-up of the path variation as in Fig. 6(B).

As shown above, the short and long time delayed profile averaging cases have their own merits and demerits. It is possible, as shown in the above

JP-A-10-271034, to adaptively change the delayed profile averaging time in dependence on the path variation status. In this case, however, problems of averaging time check errors and checking process delay are posed.

US-A-6094449 discloses a multi-path detecting circuit for detecting multi-path timings by measuring a delayed profile of a propagation channel comprising a short-period delayed profile averaging part and a long-period delayed profile averaging part for averaging the delayed profite in two different cycle periods.

To solve the above problems, it is an object of the present invention to provide a multi-path detecting circuit suitable for a CDMA receiver capable of fast and accurate multi-path detection.

This object is achieved with the features of the claims.

Other objects and features will be clarified from the following description with reference to attached drawings.
Fig. 1 is a block diagram showing a preferred embodiment of the multi-path detecting circuit according to the present invention; .
Fig. 2 is a block diagram showing a CDMA receiver using the multi-path detecting circuit 10 shown in Fig. 1;
Fig. 3 is a flow chart showing the operation of the multi-path detecting circuit according to the present invention;
Fig. 4 is a block diagram showing the construction of the different embodiment;
Fig. 5 is a flow chart for describing the operation of the multi-path detecting circuit 10' shown in Fig. 4; and
Figs. 6 (A) and 6(B) show examples of delayed profile variations.

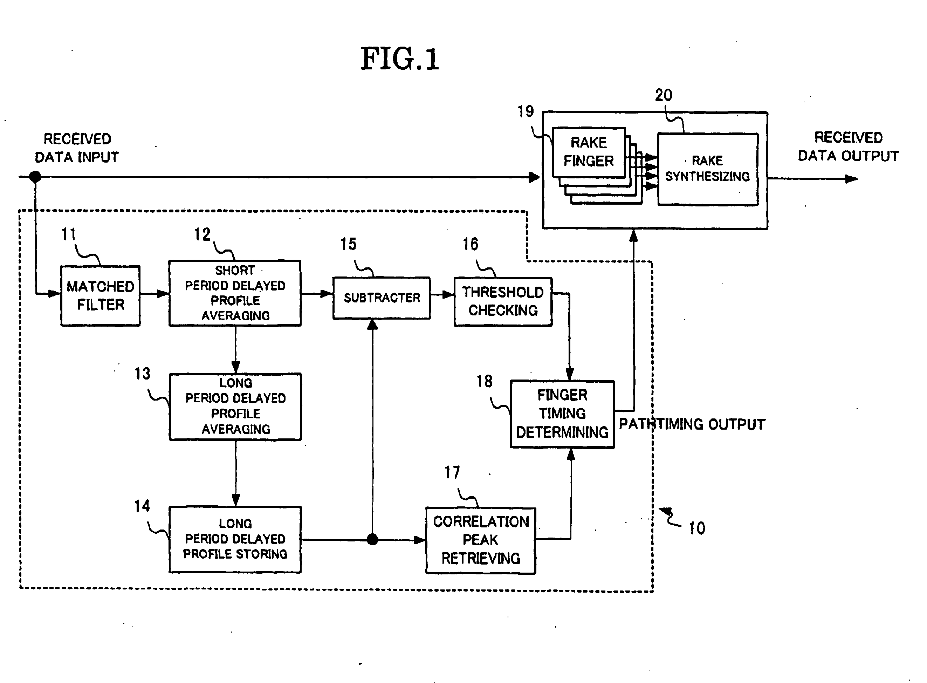

Fig. 1 is a block diagram showing a preferred embodiment of the multi-path detecting circuit according to the present invention. The multi-path detecting circuit 10 according to the present invention comprises a matched filter 11, a short period delayed profile averaging part 12, a long period delayed profile averaging part 13, a long period delayed profile storing part 14, a subtracter 15, a threshold checking part 16, a correlation peak retrieving part 17 and a finger timing determining part 18. As shown in Fig. 1, the output of the multi-path detecting circuit 10 is inputted together with received data input to an RAKE finger part 19. The output of the RAKE finger part 19 is inputted to an RAKE synthesizing part 20, which provides received data output.

In the multi-path detecting circuit 10 shown in Fig. 1, the received data input is inputted to the matched filter 11. The matched filter 11 is connected to the short period delayed profile averaging part 12. The short period delayed profile averaging part 12 is connected to the long period delayed profile averaging part 13 and also to the subtracter 15. The long period delayed profile averaging part 13 is connected via the long period delayed profile storing part 14 to the subtracter 15 and also to the correlation peak retrieving part 17. The subtracter 15 is connected via the threshold checking part 16 to the finger timing determining part 18. The correlation peak retrieving part 17 is also connected to the finger timing retrieving part 18.

The multi-path detecting circuit shown in Fig. 1 features that it determines pathes to be allotted to RAKE finger by using in combination a long period averaged delayed profile for averaging level variations due to fading and a short period averaged delayed profile for fast detecting new path generation.

In the multi-path detecting circuit 10 shown in Fig. 1, the matched filter 11 outputs correlation value data concerning spread code and received signal. The short period delayed profile averaging part 12 thus averages delayed profile of measured channel path for such a short period that noise can be averaged. The long period delayed profile averaging part 13 further power averages the short period averaged delayed profile data for a long period, and outputs the power averaged data to the long period delayed profile storing part 14. The subtracter 15 subtracts a difference from the stored long period averaged delayed profile whenever the short period averaged delayed profile is outputted. When the difference exceeds a predetermined threshold value, the threshold checking part 16 outputs data of pathes to be added.

The finger timing determining part 18 adds path allotment to the RAKE finger part 19 accordion to the output of the threshold checking part 17. The correlation peak retrieving part 16 retrieves correlation peaks up to upper rank N for every long period delayed profile storing part output. The part 18 allots these path timings to the RAKE finger part 19. N stands for number of fingers. The above operation is performed repeatedly for every two delayed profile averaging periods to estimate the multi-path timing of the propagation channel. The RAKE synthesizing part 20 synthesizes data received in the individual fingers with each multi-path. Thus, at such a low moving rate time as when the terminal user is walking, level variations due to low rate fading can be sufficiently averaged by the delayed profile averaging over the long period. It is thus possible to select pathes in the higher reliability order. In addition, even at the time of fast path position changes due to shadowing or like courses, it is possible to perform fast path allotting to the RAKE finger part by the estimation according to the short period averaged delayed profile data. Thus, it is possible to obtain multi-path detection reliability improvement independently of the moving status of the terminal. Furthermore, since the path selection according to the short period averaged delayed profile data requires only subtraction and threshold checking, it is possible to reduce the circuit scale and the current consumption.

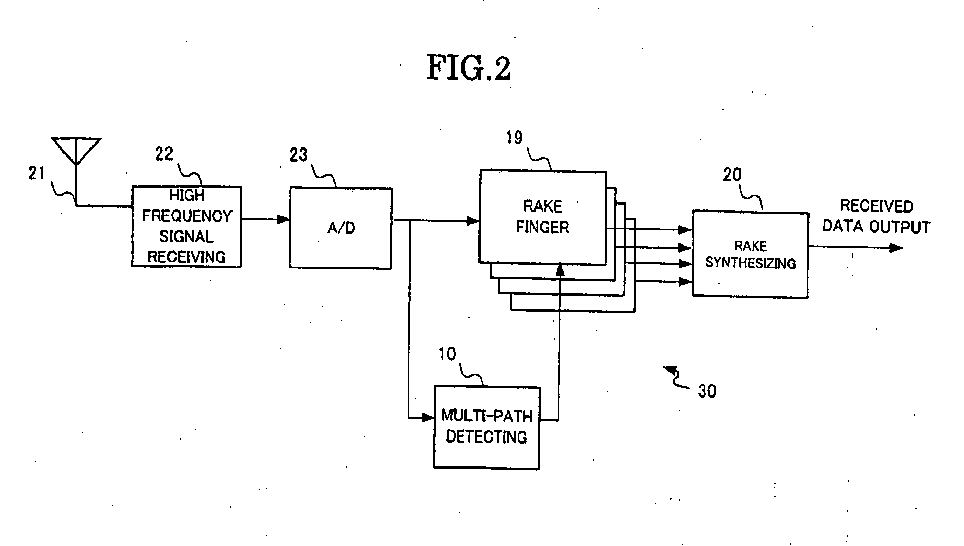

Fig. 2 is a block diagram showing a CDMA receiver using the multi-path detecting circuit 10 shown in Fig. 1. The CDMA receiver 30 comprises an antenna part 21, a high frequency signal receiving circuit part 22 and an A/D (analog-to-digital) converter 23 as well as the RAKE finger part 19, the RAKE synthesizing part 20 and the multi-path detecting part 10 shown in Fig. 1. The antenna part 21 receives radio transmitted data. The high frequency signal receiving circuit (i.e., radio part) 22 frequency converts (i.e., down-converts) the received signal. The A/D converter part 23 converts the output of the circuit 22 from analog signal to digital signal. The multi-path detecting circuit 10 receives signal from the A/D converter part 23, and detects multi-path timing by measuring the delayed profile of the propagation channel. The output of the circuit 10 is used as reception timing input to the RAKE finger part 19. The RAKE synthesizing part 20 synthesizes data from the RAKE finger part 19 as received at each timing.

The operation of the CDMA receiver will now be described with reference to the multi-path detecting circuit 10 shown in Fig. 1. As noted above, the multi-path detecting circuit 10 comprises the matched filter 11, which outputs the data of correlation of spread codes and received signal to one another. The short period delayed profile averaging part 12 averages the delayed profile of the propagation channel as measured by the matched filter 11 for such a short period of time as to be able to smooth noise. The long period delayed profile averaging part 13 power averages the short period averaged delayed profile data for a longer period of time, and outputs the resultant data to the long period delayed profile storing part 14. The subtracter 15 extracts the difference from the stored long period averaged delayed profile for every short period averaged delayed profile output.

When the difference from the long period averaged delayed profile exceeds a predetermined threshold value, the threshold checking part 16 determines that a new path has been generated, and outputs data of pathes to be added. According to this output, the finger timing determining part 18 adds path allotment to the fingers. In addition, the correlation peak retrieving part 17 retrieves correlation peaks up to upper rank N for every long period averaged delayed profile output. The part 18 allots these path timings to the RAKE finger part 19. The above operation is executed for every two delayed profile averaging periods, thus estimating the multi-path timing of the propagation channel.

The multi-path timing data thus obtained is inputted (i.e., supplied) to the RAKE finger part 19 shown in Fig. 2. With the construction as described above, at a low moving rate time such as when the terminal user is walking, the multi-path detecting circuit 10 can obtain sufficient' averaging of level variations due to slow fading by long period averaging the delayed profile. It is thus possible to obtain highly reliable path selection. At a high rate moving time, the path positions are fast changed due to shadowing or like cases. Again in this case, it is possible to fast add path allotment to the fingers by the estimation according to the short period averaged delayed profile. It is thus possible to obtain multi-path detection reliability improvement independently of the moving status of the terminal. Furthermore, since the path selection according to the short period averaged delayed profile data requires only subtraction and threshold checking, it is possible to reduce the circuit scale and the current consumption.

The matched filter 11 shown in Fig. 1 is well known to the person skilled in the art as delayed profile measuring means, and its detailed construction and operation are not described. It is possible to replace this part with a sliding correlator. The RAKE finger part 19 and the RAKE synthesizing part 20 are also well known to the person skilled in the art and have no direct bearing on the present invention, and their detailed construction and operation are not described.

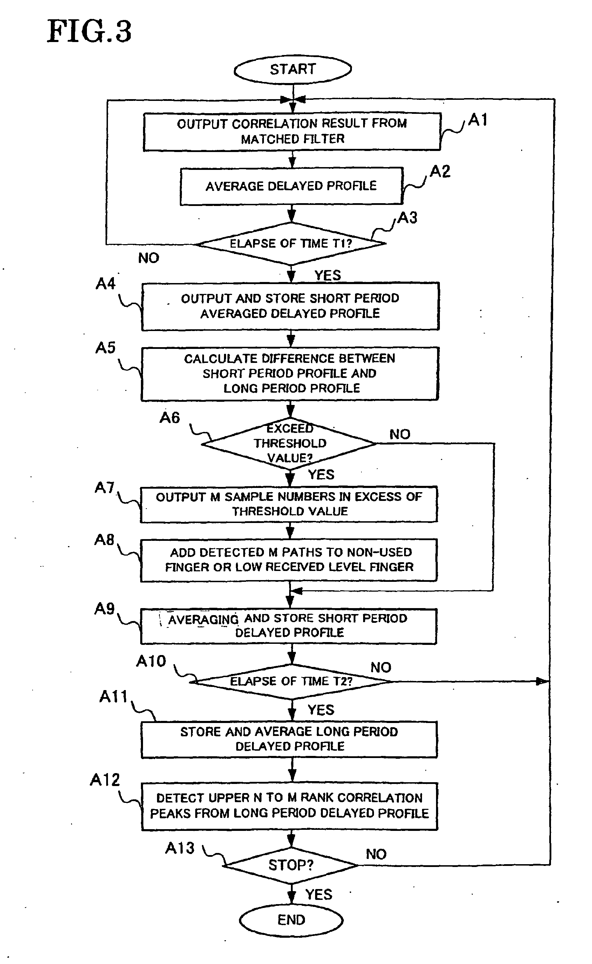

The detailed operation of the multi-path detecting circuit according to the present invention will now be described with reference to the flow chart shown in Fig. 3. The matched filter 11 executes instantaneous delayed profile measurement by calculating the correlation of spread codes and received signal to one another (step A1). This delayed profile is averaged for time T1 (for instance 10 msec.) such as to be able to smooth noise (step A2). A check is then performed as to whether the time T1 has elapsed (step A3). After the averaging for the time T1, the result of the short period averaging is outputted (step A4). The difference of the stored long period averaged delayed profile correlation data from the output data obtained in the step A4 is calculated or extracted for each sample (step A5). Then, a check is performed for each sample as to whether a predetermined threshold value has been exceeded (step A6). When the threshold value has been exceeded ("Yes" in step A6), M sample numbers in excess of the threshold value are outputted (step A7). A finger allotment determining part allots newly detected pathes to the fingers presently out of use or in the order of lower reception power level fingers (step A8). The above operation is executed in a cycle period of time T1. Thus, the detected pathes can be added in the time T1.

The short period averaged delayed profile outputted in the step A4 is then averaged for longer period T2 of time (for instance 100 msec.) (step A9). A check is then performed as to whether time T2 has elapsed (step A10). The long period averaged delayed profile data is stored for every averaging period of the time T2 (step A11). Upper N to M rank correlation peaks of the stored profile are selected, and these timings are allotted to the fingers (step A12). N is the number of fingers, and M is the number of new peaks detected in the step A7. The above process is executed in a cycle period of the time T2. Thus, it is possible to obtain sufficient averaging of the path level variations due to fading and perform path allotment to the fingers in the order of higher average reception power level pathes. Finally, a check is performed as to whether the system has been inoperative (step A13). When "Yes" is yielded in the step A13, an end is brought to the routine. When "No" is yielded in the steps A10 and A13, the routine goes back to the step A1 noted above.

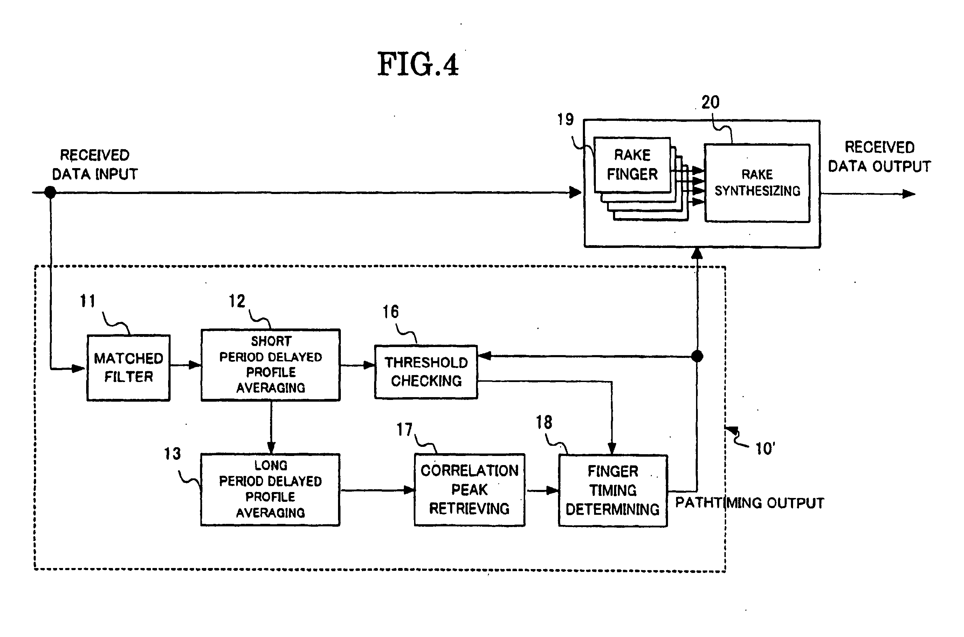

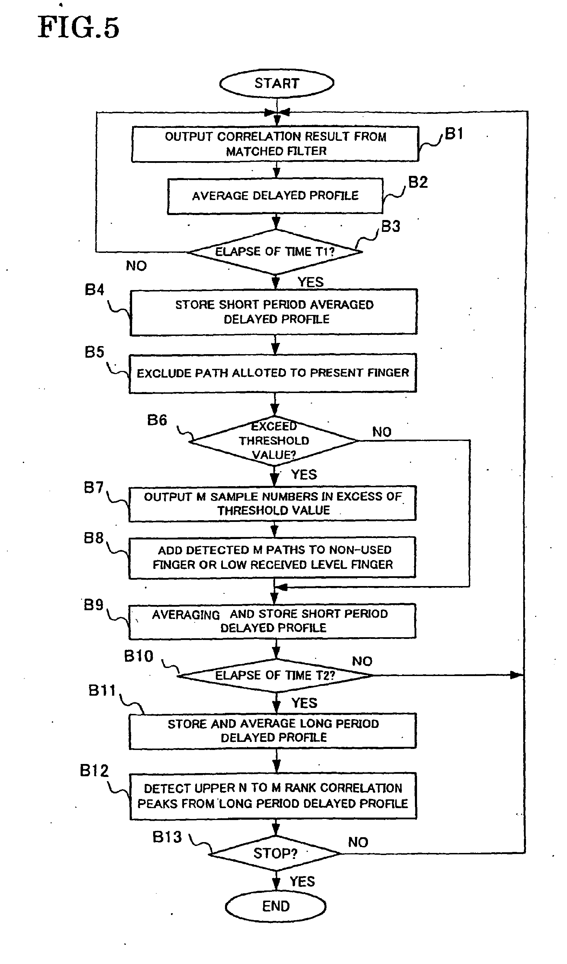

A different embodiment of the multi-path detecting circuit according to the present invention will now be described with reference to Figs. 4 and 5. Fig. 4 is a block diagram showing the construction of the different embodiment. This embodiment is the same in the basic construction as the preferred or first embodiment shown in Fig. 1. In Fig. 4, parts corresponding to those on Fig. 1 are designated by like reference numerals. The multi-path detecting circuit 10' shown in Fig. 4 is obtained by omitting the delayed profile storing part 14 and the subtracter 15 shown in Fig. 1 to reduce the necessary memory size. That is, the circuit 10' comprises the matched filter 11, the short period delayed profile averaging part 12, the long period delayed profile averaging part 13, the threshold checking part 16, the correlation peak retrieving part 17 and the finger timing determining part 18.

The matched filter 11 receives received data input, and its output is inputted to the short period delayed profile averaging part 12. The short period delayed profile averaging part 12 is connected to the long period delayed profile averaging part 13 and the threshold checking part 16. The long period delayed profile averaging part 13 is connected via the correlation peak retrieving part 17 to the finger timing determining part 18. The path timing output of the finger timing determining part 18 is inputted to the threshold checking part 16 and also to the RAKE finger part 19. The output of the RAKE finger part 19 is inputted to the RAKE synthesizing part 20, which in turn outputs received data output.

Fig. 5 is a flow chart for describing the operation of the multi-path detecting circuit 10' shown in Fig. 4. The flow chart of Fig. 5, like the flow chart of Fig. 3, is constituted by steps B1 to B13, and main difference of the former chart from the later resides in that instead of the calculation of the difference between the long period averaged delayed profile data and the short period averaged data, the threshold checking part executes the threshold check by excluding the pathes presently allotted to the fingers and samples near the detected pathes from the short period delayed profile data (step B4). Thus, it is possible to detect only new pathes, and the same effects as in the embodiment shown in Fig. 1 are obtainable. In the Fig. 4 embodiment, the subtracting process on all the samples is simplified compared to the Fig. 4 embodiment. In addition, no long period averaged delayed profile storing part (or memory) is necessary.

As has been described in the foregoing, with the multi-path detecting circuit according to the present invention the following pronounced practical effects are obtainable. In the first place, sufficient averaging of level variations due to slow fading is possible by long period averaging even at a slow moving time. It is thus possible to preferentially select high average reception power level pathes. In addition, even in such case where the path existing positions is fast changes due to shadowing or like causes, it is possible to fast add path allotment to the fingers by the estimation from the short period delayed profile. It is thus possible to obtain multi-path detection reliability improvement independently of the moving status of the terminal. Furthermore, since the path selection from the short period delayed profile requires only subtraction and threshold checking, it is possible to reduce the circuit scale and the current consumption.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

## Claims

1. A multi-path detecting circuit for detecting multi-path timings by measuring a delayed profile of a propagation channel, comprising:
a short period delayed profile averaging part (12) and a long period delayed profile averaging part (13) for averaging the delayed profile in two different, i.e., short and long, cycle periods, respectively,
**characterized by** : a storing part (14) for storing the long period averaged delayed profile ;
a subtracter (15) for determining a difference between the stored long period averaged delayed profile and The short-period averaged delay profile whenever the short period averaged delayed profile is outputted; and
a threshold checking part (16) for outputting data of pathes to be added when the difference from the subtracter exceeds a predetermined threshold value.

2. The multi-path detecting circuit according to claim 1, wherein the threshold checking part (16) is adapted for receiving the output of the short period delayed profile averaging part and checking whether the output exceeds a treshold value
further comprising a correlation peak retrieving part (17) for receiving the output of the long period delayed profile averaging part and retrieving upper rank correlation peaks for every correlation profile, and a finger timing determining part (18) for receiving the outputs of the correlation peak retrieving part (17) threshold checking part (16).

3. The multi-path detecting circuit according to claim 1 or 2 wherein the subtracter (15) is provided between the short period delayed profile averaging part (12) and the threshold checking part (16) for extracting the difference of the short period averaged delayed profile from the long period averaged delayed profile stored in the storing part (14) for each short period averaged delayed profile.

4. The circuit according to any one of claims 1 to 3. wherein the short period is set to about 10 msec., and the long period is set to about 100 msec.

5. The circuit according to any one of claims 1 to 4, which is used for a CDMA receiver having a RAKE finger part, to which the timing output from the finger timing determining part is supplied.

6. A multi-path detecting system comprising:
a matched filter (11) for outputting correlation value data concerning spread code and received signal;
a short period delayed profile averaging part (12) for averaging delayed profile of measured channel path;
a storing part (14); a long period delayed profile averaging part (13) for power averaging the short period averaged delayed profile data for long period and outputting the power averaged data to the storing part (14);
a subtracter (15) for determining a difference between the stored long period averaged delayed profile and the short-period averaged delay profile whenever the short period averaged delayed profile is outputted;
a threshold checking part (16) for outputting data of pathes to be added when the difference from the subtracter exceeds a predetermined threshold value;
a finger timing determining part (18) for adding path allotment to a RAKE finger part (19) on the basis of the output of the threshold checking part;
a correlation peak retrieving part (17) for retrieving correlation peaks up to upper rank N for every storing part output;
a finger timing determining part (18) for alloting the path timings to the RAKE finger part (19) and
a RAKE synthesizing part (20) for synthesizing data
received in the individual fingers with each multi-path.

7. A multi-path detecting method comprising steps of:
a) executing instantaneous delayed profile measurement by calculating correlation of spread codes and received signal to one another;
b) averaging the delayed profile for time such as to be able to smooth noise;
c) checking as to whether the time has elapsed;
d) outputting the result of the short period averaging after the averaging for the time;
e) calculating the difference of the long period averaged delayed profile correlation data from the short, period averaged data obtained for each sample;
f) checking, for each sample, as to whether a predetermined threshold value has been exceeded and, when the threshold value has been exceeded , outputting M sample numbers in excess of the threshold value;
g) alloting newly detected new pathes the fingers presently out of use or in the order of slower reception power level fingers.
h) averaging the short period averaged delayed profile for longer period of time;
i) checking as to whether the longer time has elapsed; k) if the outcome is yes then continuing on step l) else returning to step a)
l) storing the long period averaged delayed profile data for every averaging period of the longer time;
m) selecting upper N to M rank correlation peaks of the stored profile; and
n) alloting these timings to the fingers.

8. A CDMA receiver using the multi-path detecting circuit according to any one of claims 1 to 5, the multi-path detecting system according to claim 6 on adapted to perform the multipath detecting method according to claim 7, comprising :
an antenna part (21) for receiving radio transmitted data;
a high frequency signal receiving circuit (22) for frequency converting the received signal;
an A/D converter part (23) for converting the output of the high frequency signal receiving circuit from analog signal to digital signal;
the multi-path detecting circuit (10) for receiving signal from the A/D converter part, detecting multi-path timing and determining the detected multi-path timing as reception timing input to a RAKE finger part (19); and
a RAKE synthesizing part (20) for synthesizing data from the RAKE finger part as received at each timing.

## Patentansprüche

1. Mehrweg-Detektionsschaltung zum Erfassen von Mehrwegzeiten durch Messen eines Verzögerungsprofils eines Ausbreitungskanals, welche aufweist:
einen Kurzzeit-Verzögerungsprofil-Mittelungsteil (12) und einen Langzeit-Verzögerungsprofil-Mittelungsteil (13) zum Mitteln des Verzögerungsprofils in zwei verschiedenen, nämlich einer kurzen und einer langen, Zyklusperiode,
**gekennzeichnet durch**:
einen Speicherteil (14) zum Speichern des langzeitgemittelten Verzögerungsprofils,
einen Subtrahierer (15) zum Bestimmen einer Differenz zwischen dem gespeicherten langzeitgemittelten Verzögerungsprofil und dem kurzzeitgemittelten Verzögerungsprofil immer dann, wenn das kurzzeitgemittelte Verzögerungsprofil ausgegeben wird, und
einen Schwellenwert-Prüfteil (16) zum Ausgeben von Daten hinzuzufügender Wege, wenn die Differenz von dem Subtrahierer einen vorgegebenen Schwellenwert übersteigt.

2. Mehrweg-Detektionsschaltung nach Anspruch 1, wobei der Schwellenwert-Prüfteil (16) dafür eingerichtet ist, die Ausgabe des Kurzzeit-Verzögerungsprofil-Mittelungsteils zu empfangen und zu prüfen, ob die Ausgabe einen Schwellenwert übersteigt, und die weiter aufweist: einen Korrelationsspitzen-Gewinnungsteil (17) zum Empfangen der Ausgabe des Langzeit-Verzögerungsprofil-Mittelungsteils und zum Gewinnen von Korrelationsspitzen oberen Rangs für jedes Korrelationsprofil und einen Fingerzeit-Bestimmungsteil (18) zum Empfangen der Ausgaben des Korrelationsspitzen-Gewinnungsteils (17) und des Schwellenwert-Prüfteils (16).

3. Mehrweg-Detektionsschaltung nach Anspruch 1 oder 2, wobei der Subtrahierer (15) zwischen dem Kurzzeit-Verzögerungsprofil-Mittelungsteil (12) und dem Schwellenwert-Prüfteil (16) bereitgestellt ist, um die Differenz zwischen dem kurzzeitgemittelten Verzögerungsprofil und dem in dem Speicherteil (14) gespeicherten langzeitgemittelten Verzögerungsprofil für jedes kurzzeitgemittelte Verzögerungsprofil zu extrahieren.

4. Schaltung nach einem der Ansprüche 1 bis 3, wobei der kurze Zeitraum auf etwa 10 ms und der lange Zeitraum auf etwa 100 ms gesetzt ist.

5. Schaltung nach einem der Ansprüche 1 bis 4, die für einen CDMA-Empfänger mit einem RAKE-Fingerteil verwendet wird, dem die Zeitausgabe vom Fingerzeit-Bestimmungsteil zugeführt wird.

6. Mehrweg-Detektionssystem, welches aufweist:
ein angepasstes Filter (11) zum Ausgeben von Korrelationswertdaten in Bezug auf einen Spreizcode und das empfangene Signal,
einen Kurzzeit-Verzögerungsprofil-Mittelungsteil (12) zum Mitteln des Verzögerungsprofils des gemessenen Kanalwegs,
einen Speicherteil (14),
einen Langzeit-Verzögerungsprofil-Mittelungsteil (13) zum Leistungsmitteln der kurzzeitgemittelten Verzögerungsprofildaten über einen langen Zeitraum und zum Ausgeben der leistungsgemittelten Daten an den Speicherteil (14),
einen Subtrahierer (15) zum Bestimmen einer Differenz zwischen dem gespeicherten langzeitgemittelten Verzögerungsprofil und dem kurzzeitgemittelten Verzögerungsprofil immer dann, wenn das kurzzeitgemittelte Verzögerungsprofil ausgegeben wird,
einen Schwellenwert-Prüfteil (16) zum Ausgeben von Daten hinzuzufügender Wege, wenn die Differenz von dem Subtrahierer einen vorgegebenen Schwellenwert übersteigt,
einen Fingerzeit-Bestimmungsteil (18) zum Hinzufügen einer Wegzuweisung zu einem RAKE-Fingerteil (19) auf der Grundlage der Ausgabe des Schwellenwert-Prüfteils,
einen Korrelationsspitzen-Gewinnungsteil (17) zum Gewinnen von Korrelationsspitzen bis zum oberen Rang N für jede Ausgabe des Speicherteils,
einen Fingerzeit-Bestimmungsteil (18) zum Zuweisen der Wegzeiten zu dem RAKE-Fingerteil (19) und
einen RAKE-Synthetisierungsteil (20) zum Synthetisieren der in den einzelnen Fingern mit jedem Mehrweg empfangenen Daten.

7. Mehrweg-Detektionsverfahren mit den folgenden Schritten:
a) Ausführen momentaner Verzögerungsprofilmessungen durch Berechnen der Korrelation zwischen den Spreizcodes und dem empfangenen Signal,
b) Mitteln des Verzögerungsprofils über eine solche Zeit, dass das Rauschen geglättet werden kann,
c) Prüfen, ob die Zeit verstrichen ist,
d) Ausgeben des Ergebnisses der Kurzzeitmittelung nach dem Mitteln über die Zeit,
e) Berechnen der Differenz zwischen den langzeitgemittelten Verzögerungsprofil-Korrelationsdaten und den für jede Probe erhaltenen kurzzeitgemittelten Daten,
f) Prüfen für jede Probe, ob ein vorgegebener Schwellenwert überschritten wurde, und, falls dies der Fall ist, Ausgeben von M Proben über den Schwellenwert hinaus,
g) Zuweisen neu erfasster neuer Wege der Finger, die gegenwärtig nicht verwendet werden, oder in der Reihenfolge von Fingern mit niedrigeren Empfangsleistungspegeln,
h) Mitteln des kurzzeitgemittelten Verzögerungsprofils über einen längeren Zeitraum,
i) Prüfen, ob der längere Zeitraum verstrichen ist,
k) wobei, falls das Ergebnis Ja ist, mit Schritt 1) fortgesetzt wird, und andernfalls zu Schritt a) zurückgesprungen wird,
1) Speichern der langzeitgemittelten Verzögerungsprofildaten für jeden längeren Mittelungszeitraum,
m) Auswählen der Korrelationsspitzen der oberen Ränge N bis M des gespeicherten Profils und
n) Zuweisen dieser Zeiten zu den Fingern.

8. CDMA-Empfänger, bei dem die Mehrweg-Detektionsschaltung nach einem der Ansprüche 1 bis 5, das Mehrweg-Detektionssystem nach Anspruch 6 oder ein System, das dafür ausgelegt ist, das Mehrweg-Detektionsverfahren nach Anspruch 7 auszuführen, verwendet wird, welcher aufweist:
einen Antennenteil (21) zum Empfangen über Funk gesendeter Daten,
eine Hochfrequenzsignal-Empfangsschaltung (22) zum Frequenzwandeln des Empfangssignals,
einen A/D-Wandlerteil (23) zum Wandeln der Ausgabe der Hochfrequenzsignal-Empfangsschaltung von einem Analogsignal in ein Digitalsignal,
die Mehrweg-Detektionsschaltung (10) zum Empfangen des Signals vom A/D-Wandlerteil, zum Erfassen der Mehrwegzeit und zum Bestimmen der erfassten Mehrwegzeit als Empfangszeit, die in einen RAKE-Fingerteil (19) eingegeben wird, und
einen RAKE-Synthetisierungsteil (20) zum Synthetisieren von zu jedem Zeitpunkt vom RAKE-Fingerteil empfangenen Daten.

## Revendications

1. Circuit de détection multi-voies pour détecter des chronogrammes de voies multiples en mesurant un profil retardé d'un canal de propagation, comprenant :
une partie de calcul de moyenne de profil retardé de période courte (12) et une partie de calcul de moyenne de profil retardé de période longue (13) pour calculer la moyenne du profil retardé sur deux périodes de cycle différentes, une période de cycle courte et une période de cycle longue, respectivement,
**caractérisé par** :
une partie de stockage (14) pour stocker le profil retardé moyenné de période longue ;
un soustracteur (15) pour déterminer une différence entre le profil retardé moyenné de période longue stocké et le profil retardé moyenné de période courte chaque fois que le profil retardé moyenné de période courte est émis ; et
une partie de vérification de seuil (16) pour émettre des données concernant les voies à ajouter lorsque la différence provenant du soustracteur dépasse une valeur de seuil prédéterminée.

2. Circuit de détection multi-voies selon la revendication 1, dans lequel la partie de vérification de seuil (16) est adaptée pour recevoir la sortie de la partie de calcul de moyenne de profil retardé de période courte et vérifier si la sortie dépasse une valeur de seuil, comprenant en outre une partie de récupération de pointes de corrélation (17) pour recevoir la sortie de la partie de calcul de moyenne de profil retardé de période longue et récupérer des pointes de corrélation de rang supérieur pour chaque profil de corrélation, et une partie de détermination de chronogramme de dent (18) pour recevoir les sorties de la partie de récupération de pointes de corrélation (17), et la partie de vérification de seuil (16).

3. Circuit de détection multi-voies selon la revendication 1 ou 2, dans lequel le soustracteur (15) est disposé entre la partie de calcul de moyenne de profil retardé de période courte (12) et la partie de vérification de seuil (16), pour extraire la différence entre le profil retardé moyenné de période courte et le profil retardé moyenné de période longue stocké dans la partie de stockage (14) pour chaque profil retardé moyenne de période courte.

4. Circuit selon l'une quelconque des revendications 1 à 3, dans lequel la période courte est fixée à environ 10 ms, et la période longue est fixée à environ 100 ms.

5. Circuit selon l'une quelconque des revendications 1 à 4, qui est utilisé pour un récepteur CDMA ayant une partie faisant dents de râteau, à laquelle le chronogramme émis par la partie de détermination de chronogramme de dent est fourni.

6. Système de détection multi-voies, comprenant :
un filtre adapté (11) pour émettre les données de valeur de corrélation concernant le code étalé et le signal reçu ;
une partie de calcul de moyenne de profil retardé de période courte (12) pour calculer la moyenne du profil retardé de la voie de canal mesurée ;
une partie de stockage (14) ;
une partie de calcul de moyenne de profil retardé de période longue (13) pour calculer la moyenne de puissance des données de profil retardé moyennées de période courte sur une longue période et envoyer les données de puissance moyennées à la partie de stockage (14) ;
un soustracteur (15) pour déterminer une différence entre le profil retardé moyenne de période longue stocké et le profil retardé moyenné de période courte chaque fois que le profil retardé moyenné de période courte est émis ;
une partie de vérification de seuil (16) pour émettre des données concernant les voies à ajouter lorsque la différence provenant du soustracteur dépasse une valeur de seuil prédéterminée;
une partie de détermination de chronogramme de dent (18) pour ajouter une allocation de voie à une partie faisant dents de râteau (19) en fonction de la sortie de la partie de vérification de seuil ;
une partie de récupération de pointes de corrélation (17) pour récupérer des pointes de corrélation jusqu'au rang supérieur N pour chaque sortie de la partie de stockage ;
une partie de détermination de chronogramme de dent (18) pour allouer les chronogrammes de voies à la partie faisant dents de râteau (19) ; et
une partie de synthèse de râteau (20) pour synthétiser les données reçues dans les dents individuelles avec chacune des voies multiples.

7. Procédé de détection multi-voies comprenant les étapes consistant à :
a) exécuter une mesure de profil retardé instantanée en calculant la corrélation entre les codes étalés et le signal reçu ;
b) calculer la moyenne du profil retardé dans le temps pour permettre de lisser le bruit ;
c) vérifier si le temps est écoulé ;
d) émettre le résultat du calcul de moyenne de période courte après calcul de la moyenne dans le temps ;
e) calculer la différence entre les données de corrélation de profil retardé moyennées de période longue et les données moyennées de période courte obtenues pour chaque échantillon ;
f) vérifier, pour chaque échantillon, si une valeur de seuil prédéterminée a été dépassée et, si la valeur de seuil prédéterminée a été dépassée, émettre un nombre M d'échantillons dépassant la valeur de seuil ;
g) allouer aux nouvelles voies récemment détectées les dents actuellement inutilisées ou les dents de niveau de puissance de réception d'un ordre plus bas.
h) calculer la moyenne du profil retardé moyenne de période courte sur une période de temps plus longue ;
i) vérifier si le temps plus long s'est écoulé ;
k) si la réponse est oui, poursuivre à l'étape 1), sinon revenir à l'étape a) ;
1) stocker les données de profil retardé moyennées de période longue pour chaque période de calcul de moyenne du temps plus long ;
m) sélectionner les pointes de corrélation de rangs supérieurs N à M du profil stocké ; et
n) allouer ces chronogrammes aux dents.

8. Récepteur CDMA utilisant le circuit de détection multi-voies selon l'une quelconque des revendications 1 à 5, le système de détection multi-voies selon la revendication 6 ou adapté pour exécuter le procédé de détection multi-voies selon la revendication 7, comprenant :
une partie faisant antenne (21) pour recevoir des données émises par radio ;
un circuit de réception de signal haute fréquence (22) pour convertir en fréquence le signal reçu ;
une partie faisant convertisseur A/N (23) pour convertir la sortie du circuit de réception de signal haute fréquence pour la faire passer d'un signal analogique à un signal numérique ;
le circuit de détection multi-voies (10) pour recevoir le signal provenant de la partie faisant convertisseur A/N, détecter le chronogramme de voies multiples et déterminer le chronogramme de voies multiples détecté comme entrée de chronogramme de réception vers une partie faisant dents de râteau (19) ; et
une partie de synthèse de râteau (20) pour synthétiser les données provenant de la partie faisant dents de râteau telles qu'elles sont reçues dans chaque chronogramme.
